# FASCICULE DE BREVET EUROPEEN

(11) **EP 1 297 237 B1**
(45) Date de publication et mention de la délivrance du brevet: **04.09.2013**
(21) Numéro de dépôt: 01984111.3
(22) Date de dépôt: 05.07.2001
(51) Int. Cl.: E06B 3/54, E04F 13/08

(54) **DISPOSITIF DE FIXATION POUR UN ELEMENT DE PAROI FEUILLETE**
BEFESTIGUNGSVORRICHTUNG FÜR EIN MEHRSCHICHTIGES WANDELEMENT
FIXING DEVICE FOR A LAMINATED WALL ELEMENT

(30) Priorité: 06.07.2000 DE 10032383; 04.11.2000 DE 10054816
(43) Date de publication de la demande: 02.04.2003
(73) Titulaire: SAINT-GOBAIN GLASS FRANCE, 92400 Courbevoie (FR)
(72) Inventeur: KNAACK, Ulrich, 40593 Düsseldorf (DE); BLÖBAUM, Udo, 33818 Leopoldshöne (DE); SCHULTE, Dirk, 33014 Bad Driburg (DE); HERMENS, Ulrich, 52078 Aachen (DE)
(74) Mandataire: Muller, René
(86) Numéro de dépôt international: PCT/FR2001/002166
(87) Numéro de publication internationale: WO 2002/002899

(56) Documents cités:
- EP-A- 0 314 120
- EP-A- 0 367 908
- EP-A- 0 619 435
- EP-A- 0 682 164
- DE-C- 19 751 124
- DE-U- 29 719 720

## Description

L'invention concerne un élément de paroi feuilleté qui doit être fixé sans cadre sur une sous-construction par exemple métallique. Elle concerne en particulier un élément de paroi constitué d'une plaque feuilletée formée de plusieurs feuilles, dont la feuille du côté de la paroi présente des ouvertures traversantes, par exemple des alésages, dans lesquels sont disposés des éléments de fixation qui s'appuient contre la face arrière tournée vers le feuilleté, de la feuille du côté du bâtiment.

De tels éléments de paroi peuvent être non seulement des plaques feuilletées se composant de feuilles de verre avec des couches de colle, mais aussi des feuilletés mixtes verre-plastique ou des plaques feuilletées en plastique multicouche. En outre, les éléments de paroi peuvent aussi être des plaques constituées d'autres matériaux feuilletés, tels que la pierre, la céramique, etc. Tous ces cas d'application sont inclus implicitement dans la description de la présente invention sans être pour autant mentionnés spécifiquement, et sont implicitement inclus, entre autres, dans les termes "élément de paroi" et/ou "plaque feuilletée". Les cas d'application utilisant des vitres de verre feuilletées présentent toutefois une signification particulière.

Aux fins de clarification, il convient encore de noter que "du côté de la paroi" ou "du côté du bâtiment" doit toujours signifier le côté ou la feuille de la plaque feuilletée tourné vers la sous-construction, par exemple une paroi de bâtiment dans la région extérieure et/ou intérieure, tandis que "du côté extérieur" ou "à l'extérieur" signifie le côté ou la feuille libre, du côté opposé à la sous-construction.

Des éléments de paroi comprenant des éléments de fixation, tels que des vitres de verre feuilletées, sont connus dans différentes réalisations. Par exemple, le document EP-A2-0 277 535 décrit un dispositif de fixation dans lequel les alésages dans la feuille de verre du côté du bâtiment présentent du côté orienté vers la feuille de colle un renfoncement de forme tronconique du type d'un alésage fraisé. Dans cet alésage est insérée par engagement positif, en intercalant une douille de plastique, un boulon de fixation ayant la forme d'une vis à tête conique, la surface circulaire de la tête conique reposant en affleurement dans la surface plane de la feuille de verre du côté du bâtiment.

On connaît, par le document EP-B1-0 340 089, un dispositif de fixation du type susmentionné pour des vitres de verre feuilletées, dans lequel les éléments de fixation disposés dans les alésages de la feuille de verre du côté du bâtiment sont pourvus d'une pièce de retenue en forme de disque qui s'appuie d'une part sur la surface de la feuille de verre du côté du bâtiment dans la zone périphérique de l'alésage, et qui est collée d'autre part à la feuille de verre extérieure par le biais de la couche intermédiaire de la vitre de verre feuilletée.

Le document EP-A1-0 799 949 décrit entre autres également un dispositif de fixation du type générique susmentionné. Dans ce cas également, la feuille de verre du côté du bâtiment est pourvue d'alésages fraisés. Dans ces alésages fraisés est introduit un écrou à bride, dans lequel est vissé un boulon fileté avant le montage de l'élément de paroi.

Dans ces dispositifs de fixation connus, le poids de la feuille de verre extérieure est exclusivement supporté par la couche de liaison thermoplastique de la vitre de verre feuilletée. Dans le cas d'éléments de paroi ayant des feuilles de verre extérieures de grande taille et lourdes, ceci peut en particulier provoquer des problèmes à long terme lorsque les plaques de façade s'échauffent fortement sous l'effet du rayonnement solaire et que la couche de liaison thermoplastique se ramollit sous l'effet de la chaleur.

On connaît, par le document DE-C1-197 51 124, un dispositif de fixation pour des plaques de verre feuilletées, dans lesquelles la feuille de verre extérieure est pourvue, sur le côté orienté vers la feuille de verre du côté du bâtiment, coaxialement aux alésages dans la feuille de verre du côté du bâtiment, d'alésages borgnes en contre-dépouille. Les éléments de fixation comprennent une cheville en contre-dépouille avec un élément d'écartement, qui est ancré dans l'alésage borgne en contre-dépouille par engagement par force. Dans ce cas, le support de la charge de la feuille de verre extérieure n'est plus réalisé par la couche de liaison thermoplastique, mais par l'élément d'écartement pénétrant dans l'alésage borgne. L'élément d'écartement exerce toutefois des forces radiales et axiales considérables sur la périphérie du trou de l'alésage en contre-dépouille, qui conduisent aisément à une ébréchure ou une fêlure du verre.

L'invention a pour objet de développer un élément de paroi en matériau feuilleté, comprenant des éléments de fixation, qui soit amélioré en particulier en ce qui concerne le support de la charge de feuilles extérieures.

Cet objectif est réalisé par les caractéristiques de la revendication 1. Les revendications secondaires 2 à 27 indiquent des perfectionnements avantageux de cet objectif, tandis que la revendication 28 se rapporte à une paroi en résultant.

Partant d'un dispositif de fixation du type susmentionné, l'élément de paroi selon l'invention constitué par une plaque feuilletée, comprenant une feuille du côté du bâtiment, une feuille du côté extérieur et des éléments de fixation, la feuille du côté extérieur de la plaque feuilletée étant pourvue d'évidements alignés axialement sur les ouvertures ou trous dans la feuille du côté de la paroi, et ouverts vers ceux-ci, se distingue donc par le fait que les portions d'extrémité des éléments de fixation pénètrent dans les évidements et qu'à chaque fois au moins l'espace creux formé entre la paroi de l'évidement et la portion d'extrémité de l'élément de fixation est rempli d'une masse de remplissage durcie. Les éléments de fixation traversent ainsi toute la feuille du côté de la paroi, mais pénètrent seulement partiellement à travers la feuille extérieure.

De ce fait, la charge de la feuille extérieure est essentiellement supportée par les éléments de fixation sans que des forces d'une intensité indésirable ne s'exercent par le biais de l'agencement des éléments de fixation sur les feuilles (de verre) intégrées dans le feuilleté.

De tels éléments de paroi peuvent naturellement aussi être des plaques feuilletées comprenant plus de deux feuilles. Dans toutes les configurations, les évidements se trouvent évidemment dans la feuille individuelle la plus extérieure, tandis que les feuilles se trouvant plus près de la sous-construction présentent des ouvertures traversantes, en affleurement axial, pour le passage de l'élément de fixation.

Les évidements peuvent présenter des dimensions ou des diamètres intérieurs égaux ou similaires à ceux des ouvertures qui leur sont associées. Ils peuvent toutefois aussi présenter des dimensions ou des diamètres intérieurs plus grands que ceux des ouvertures associées. On préfère en particulier que les évidements soient complètement remplis de la masse de remplissage jusqu'à une face en regard du fond de l'évidement à l'intérieur du feuilleté. Cette face peut être formée par une portion de la surface de la feuille du côté du bâtiment se trouvant dans le feuilleté, ou également par des parois d'une contre-dépouille à l'intérieur de l'évidement. A cet effet, l'absorption de forces axiales est également assurée par l'élément de fixation.

Les ouvertures traversant la feuille du côté de la paroi peuvent être réalisées sous forme circulaire, en tant qu'alésages, rectangulaire et oblongue en tant que fentes, ou avec encore d'autres sections transversales. Les évidements peuvent, de manière correspondant aux ouvertures associées, également être réalisés sous forme circulaire en tant que trous borgnes, rectangulaire, oblongue en tant que rainures ou avec d'autres formes et sections transversales appropriées (par exemple tronconique, en queue d'aronde), mais ils ne traversent jamais complètement la feuille respective.

Les évidements sont de préférence des trous borgnes cylindriques, des rainures rectangulaires et similaires, mais ils peuvent également avoir une forme en section transversale en contre-dépouille légèrement conique, car de telles sections transversales légèrement en contre-dépouille sont faciles à fabriquer dans certaines circonstances, en particulier dans des feuilles de verre. Dans ce cas également, le dimensionnement ou le diamètre intérieur plus grand se trouve à l'intérieur de l'évidement, l'évidement à la surface de la feuille extérieure devant présenter au moins le même diamètre intérieur que l'ouverture traversante associée dans la feuille du côté du bâtiment.

Il se forme de ce fait des sections transversales libres ou des espaces creux à l'intérieur de la plaque feuilletée, le cas échéant en contre-dépouille, qui reçoivent l'élément de fixation et qui peuvent être remplis de la masse de remplissage. En même temps, la face (visible) extérieure de la feuille extérieure de l'élément de paroi reste exempte de perforations.

En général, on s'efforce de remplir les ouvertures et les évidements dans les feuilles déjà avec les éléments de fixation qui doivent y être insérés, jusqu'à ce qu'il ne reste que des fentes ou des espaces libres relativement petits, qui sont finalement remplis de la masse de remplissage. Si les ouvertures et les évidements sont circulaires, on utilisera donc des éléments de fixation de pourtour rond ou polygonal, par exemple des boulons, des tourillons. Si les ouvertures et les évidements associés sont oblongs, les éléments de fixation auront aussi une forme oblongue, par exemple comme des listels, des nervures, des ailes, ou similaires. Dans ce cas, leur dimension longitudinale sera orientée de préférence transversalement à l'action de la force de pesanteur, pour diminuer la charge superficielle.

En remplissant l'évidement avec la masse de remplissage qui se durcit, on obtient une liaison idéale entre la portion d'extrémité de l'élément de fixation et l'évidement, dans laquelle aucun pic de force ne s'applique sur la surface intérieure du trou, même dans le cas d'une charge pondérale élevée, à travers la feuille extérieure. Au contraire, la paroi de la surface intérieure du trou est sollicitée de manière uniforme, mais reste toutefois exempte de forces de contrainte radiales ou axiales supplémentaires. De cette manière, la charge de la feuille extérieure dans la région des évidements est supportée de manière sûre et sans risque d'endommagement de la feuille ; la couche de colle du feuilleté est essentiellement exempte de contraintes.

Les éléments de fixation doivent d'abord être insérés dans les ouvertures prévues à cet effet après la mise en place des plaques feuilletées, car la masse de remplissage peut ensuite être versée. Ceci présente aussi l'avantage, par rapport aux solutions génériques connues, que le déroulement de la production des plaques feuilletées ne subit aucune influence perturbatrice, par exemple dues à des pièces métalliques saillantes.

Dans un perfectionnement approprié de l'invention, l'espace creux entre la paroi de l'évidement et la portion d'extrémité de l'élément de fixation est rempli de la masse de remplissage jusqu'à la face en regard du fond de l'évidement, sur la feuille du côté du bâtiment. De cette manière, on obtient un support particulièrement uniforme et efficace de l'élément de fixation contre le dos de la feuille du côté du bâtiment, de sorte que l'élément de fixation peut aussi accepter des forces axiales considérables. Il est en outre avantageux, mais pas absolument nécessaire, de remplir aussi l'espace creux demeurant entre l'élément de fixation et l'ouverture traversante avec la masse de remplissage, afin de garantir également dans cette zone un transfert de la charge de la surface périphérique de l'ouverture à l'élément de fixation.

La capacité de charge du dispositif de fixation dans la direction axiale peut être encore accrue, dans un perfectionnement de l'invention, en connectant de manière durable au moins la portion d'extrémité de l'élément de fixation à la masse de remplissage. Une telle connexion durable est réalisée de manière avantageuse en prévoyant au moins sur la surface périphérique de la portion d'extrémité de l'élément de fixation une ou plusieurs entailles pour l'ancrage avec la masse de remplissage. Lors du remplissage de l'espace creux avec la masse de remplissage d'abord encore coulante, celle-ci pénètre aussi dans les entailles. Une fois rigidifiée, la masse de remplissage y est ancrée par engagement positif avec l'élément de fixation.

Dans une réalisation avantageuse, l'élément de fixation est pourvu d'un alésage axial traversant, à travers lequel la masse de remplissage peut être versée de l'extérieur dans l'évidement. Conformément à un perfectionnement, à proximité ou au niveau de l'extrémité de l'élément de fixation à introduire dans l'évidement, on prévoit au moins une ouverture radiale communiquant avec l'alésage axial, par exemple un alésage ou une fente transversaux. A travers ceux-ci, la masse de remplissage elle-même peut s'échapper en direction radiale dans l'évidement, si l'extrémité libre de l'élément de fixation est quasiment en contact avec le fond de l'évidement et que la sortie de l'alésage axial est très étroite.

Dans une réalisation préférée, le dispositif de fixation comprend une butée de profondeur connectée à l'élément de fixation, laquelle vient en appui contre la surface de la plaque feuilletée et définit la profondeur d'insertion de l'élément de fixation. Elle peut être connectée fixement (d'une pièce) ou de manière réglable, à l'élément de fixation. Elle peut par exemple être réalisée sous la forme d'une plaque ou d'une nervure plane périphérique ou sous forme de projections en saillie individuelles. Une connexion par collage peut également être prévue entre la butée de profondeur et la surface de la plaque feuilletée lui faisant face, cette connexion pouvant supporter de plus grandes forces axiales par le biais de l'élément de fixation.

Avant tout, si la feuille extérieure se compose de matériau transparent, par exemple de verre, le point de fixation ou la masse de remplissage versée sont de préférence recouverts pour ne pas être vus de l'extérieur. A cet effet, on peut utiliser davantage des pièces d'insertion reposant sur le fond de l'évidement, telles que des disques ou des couvercles, des revêtements opaques ou similaires.

D'autres configurations et perfectionnements avantageux de l'invention résultent de la description suivante de divers exemples de réalisation avec des vitres de verre feuilletées, illustrée par les dessins.

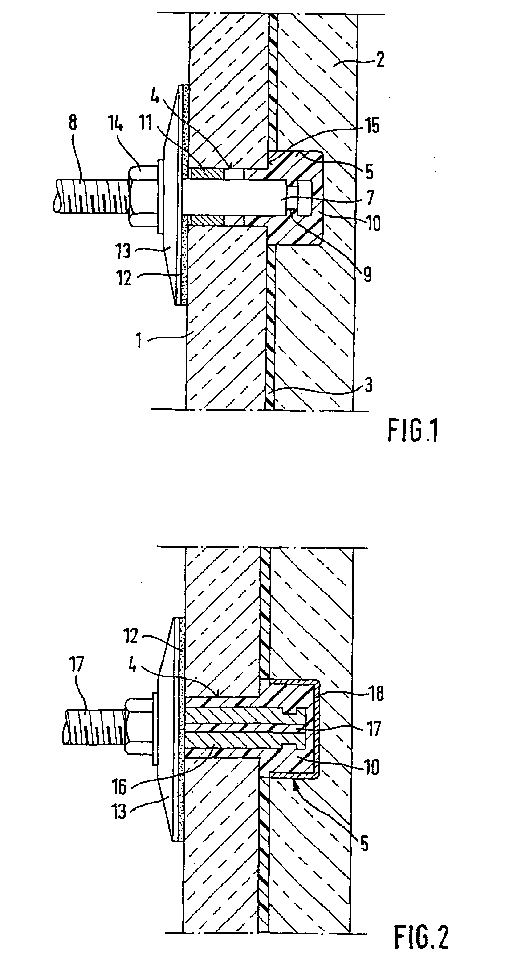

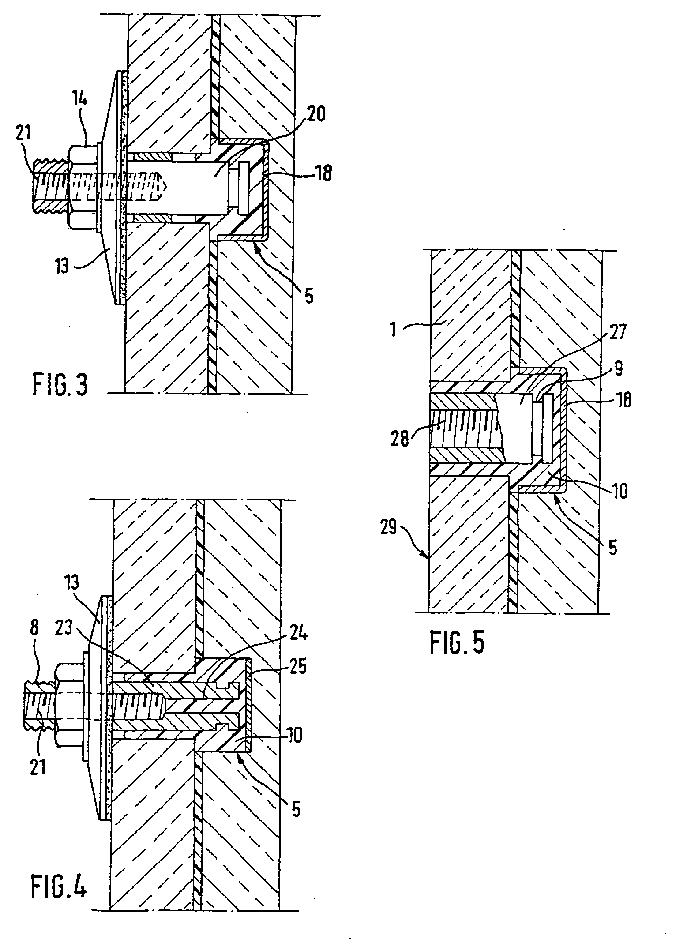

Dans les dessins, sont représentés, à chaque fois en coupe,
- en figure 1, un élément de paroi avec un boulon de fixation massif à filetage externe ;
- en figure 2, un élément de paroi avec un boulon de fixation à filetage externe et avec un alésage axial traversant ;
- en figure 3, une forme de réalisation avec un boulon de fixation avec un filetage interne ;
- en figure 4, une forme de réalisation avec un boulon de fixation avec un filetage interne et un alésage axial traversant ; et
- en figure 5, un élément de paroi avec une douille filetée fermant en affleurement la surface de la plaque, et servant d'élément de fixation.

Les exemples de réalisation décrits ci-après, ne se limitant pas aux matériaux décrits pour les plaques, illustrent à chaque fois des fixations pour des vitres de verre feuilletées se composant de deux feuilles de verre et/ou de plastique. Il s'entend toutefois que ces vitres peuvent également être composées de feuilletés de trois feuilles de plastique et/ou de verre, ou plus. En outre, dans les exemples de réalisation, les ouvertures sont réalisées et décrites sous la forme d'alésages et les évidements sous la forme de trous borgnes.

Dans les exemples ci-dessous, une vitre de verre feuilletée formant l'élément de paroi se compose d'une feuille de verre 1 du côté du bâtiment, d'une feuille de verre extérieure 2 et d'une feuille de colle thermoplastique 3 reliant l'une à l'autre les deux feuilles de verre 1 et 2, se composant de préférence de polyvinylbutyral. L'une des deux feuilles de verre 1, 2 ou éventuellement aussi les deux feuilles de verre peuvent être pourvues d'un revêtement de surface transparent ou bien opaque non illustré ici, par exemple un revêtement réfléchissant le rayonnement thermique. La feuille de verre 1 du côté du bâtiment se compose de préférence de verre précontraint, notamment durci ou trempé par traitement thermiqeu ou chimique, de préférence par traitement thermique. Elle présente des alésages cylindriques 4 qui sont réalisés avant le processus de précontrainte. Des trous borgnes 5, alignés aussi précisément que possible axialement sur ces alésages 4 sont réalisés dans la feuille de verre extérieure 2. Leur diamètre est par exemple supérieur de quelques millimètres au diamètre des alésages 4. La feuille de colle thermoplastique 3 est évidée de manière circulaire dans la zone des alésages, de façon concentrique à ceux-ci, le diamètre de ces évidements correspondant au diamètre des trous borgnes 5. Du fait de la différence de diamètre entre les trous borgnes 5 et les alésages 4, il subsiste donc une surface annulaire circulaire sur le côté, tourné vers le feuilleté, de la face de la feuille 1 du côté du bâtiment. Sur ce point, toutes les formes de réalisation décrites présentent les mêmes caractéristiques, de sorte que l'on ne reviendra pas sur ces caractéristiques communes dans la suite de la description.

Pour des raisons de simplification, la sous-construction à laquelle les vitres feuilletées sont fixées, n'est pas illustrée. On peut prévoir, pour chaque point de fixation individuel formé par un élément de fixation, une connexion propre avec la sous-construction. Dans une autre réalisation, plusieurs éléments de fixation qui sont disposés relativement proches les uns des autres ou bien dans les zones périphériques de plaques feuilletées appuyées les unes contre les autres, peuvent être assemblés au moyen d'une plaque ou d'une autre construction pour former un groupe et être fixés ensemble à la sous-construction.

Dans la forme de réalisation illustrée dans la figure 1, l'élément de fixation est un boulon cylindrique 7 qui sort de la feuille de verre 1 du côté du bâtiment et qui est pourvu d'un filetage externe 8 sur sa portion en saillie. Celui-ci peut être connecté à une sous-construction de la manière connue correspondante. L'autre extrémité du boulon 7 est pourvue d'une entaille 9 périphérique.

Pour la fixation du boulon 7 dans la vitre de verre feuilletée, dans la disposition à plat de la vitre de verre feuilletée, la masse de remplissage coulante 10 est tout d'abord versée à travers l'alésage 4 dans le trou borgne 5, et ce en quantité telle que le trou borgne 5 soit pratiquement rempli. Une masse de remplissage ou de scellement coulante appropriée est par exemple le produit "HILTI HIT HY 50" disponible dans le commerce. Ce produit n'adhère pas au verre et a un comportement neutre vis-à-vis de la feuille de colle 3 avec laquelle il est en contact. Après le durcissement ou la rigidification, la masse de remplissage a un comportement non élastique.

Après que la masse de remplissage 10 a été versée dans le trou borgne 5, le boulon 7 est inséré dans l'alésage 4 et est enfoncé de quelques millimètres dans également la masse de remplissage 10, qui s'écoule alors également dans l'entaille 9. Naturellement, des moyens d'évacuation de l'air sont prévus pour laisser échapper l'air déplacé par la masse de remplissage 10 lors de l'insertion du boulon 7. Afin que le boulon 7 soit inséré centralement, on dispose sur sa tige une bague de centrage 11, dont le diamètre extérieur correspond approximativement au diamètre intérieur de l'alésage 4. Cette bague de centrage transmet aussi de la sorte des charges de la feuille 1 à l'élément de fixation. En outre, une plaque 13 servant de butée de profondeur, de préférence pourvue d'une couche de colle 12, est disposée sur le boulon 7, la position de la plaque étant déterminée par un écrou 14 et celle-ci étant collée par le biais de la couche de colle 12 à la feuille de verre 1. A la place de la couche de colle, on pourrait aussi utiliser une couche intermédiaire élastique non adhésive. La profondeur d'enfoncement du boulon 7 est avantageusement prédéterminée par réglage de la plaque 13 le long de la tige du boulon au moyen de l'écrou 14.

Dans une variante non illustrée, le boulon et la plaque pourraient également être réalisés d'une seule pièce, afin de prévoir ainsi une profondeur d'enfoncement précise du boulon dans la plaque feuilletée et dans la masse de remplissage. Ceci suppose toutefois un strict respect des cotes dans le cas de la profondeur disponible de l'évidement.

Après le durcissement de la masse de remplissage 10, celle-ci s'appuie sur la face annulaire circulaire 15 de la feuille de verre 1 entourant l'alésage 4 à l'intérieur du feuilleté, de sorte que les forces de succion s'exerçant dans l'état monté sur la plaque de verre feuilletée sont ainsi reprises - et éventuellement par le collage avec la plaque 13 - et transférées par la masse de remplissage 10 ou l'écrou 14 dans le boulon 7 et la sous-construction retenant celui-ci.

Dans la forme de réalisation illustrée dans la figure 2, le boulon 16 est pourvu d'un alésage axial traversant 17. De plus, un couvercle 18, par exemple en laiton chromé, est disposé dans le trou borgne 5, et s'applique étroitement contre la paroi du trou borgne 5. Le boulon 16 et la masse de remplissage 10 sont recouverts vers l'extérieur par le couvercle 18. Dans cette réalisation, lors du montage, le boulon 16 pourvu de la plaque 13 est d'abord inséré dans l'alésage 4 jusqu'à la position finale souhaitée. Dans cette position, le boulon 16 avec la plaque 13 sont fixés à l'aide de la couche de colle 12 ou d'une autre manière appropriée avec une profondeur d'enfoncement définie. Ensuite, la masse de remplissage coulante 10 est versée à travers l'alésage 17 dans l'espace creux entre le boulon 16, le couvercle 18 et la surface intérieure du trou de l'alésage 4, et remplit complètement cet espace également dans la zone de l'alésage 4. La masse de remplissage est au besoin aussi injectée sous pression. Naturellement, des moyens d'évacuation de l'air doivent ici aussi être prévus le long de la fente annulaire entre le boulon 16 et la surface périphérique de l'alésage 4 et à travers la couche de colle 12 et/ou la plaque 13. Après le durcissement de la masse de remplissage 10, l'élément de paroi pour le montage sur la sous-construction est prêt à l'utilisation, le filetage externe du boulon 16 devant à nouveau être connecté à celle-ci.

La forme de réalisation du dispositif de fixation selon l'invention, illustrée dans la figure 3, est comparable à l'exemple décrit dans la figure 1 pour ce qui est de la disposition du boulon 20. Dans ce cas, un couvercle 18 est toutefois à nouveau disposé dans le trou borgne 5. Le boulon 20 est pourvu d'une part d'un filetage externe 8 en vue du positionnement de la plaque 13 à l'aide de l'écrou 14, et d'autre part d'un filetage interne 21 pour la fixation de l'élément de paroi à la sous-construction.

La forme de réalisation supplémentaire illustrée dans la figure 4 comprend un boulon de fixation 23 qui est pourvu à nouveau, au niveau de sa portion saillant par-dessus la feuille de verre du côté du bâtiment, d'un filetage externe 8 pour le positionnement de la plaque 13, ainsi que d'un filetage interne 21 pour l'insertion d'un autre boulon vissable non illustré, pour la fixation de l'élément de paroi à la sous-construction. De plus, le boulon 23 est pourvu dans sa portion pénétrant à l'intérieur de la vitre de verre feuilletée d'un alésage axial traversant 24. Celui-ci sert à son tour à remplir la masse de remplissage 10 de la même manière que décrite dans l'exemple illustré dans la figure 2. Au lieu d'un couvercle, dans ce cas, seul un disque 25 est disposé sur le fond du trou borgne 5, celui-ci ayant la même fonction que le couvercle 18 dans les exemples décrits précédemment. La masse de remplissage pourrait aussi être recouverte optiquement au moyen d'un revêtement opaque du fond, éventuellement aussi des parois internes du trou borgne à l'endroit du couvercle 18 ou du disque 25.

Une autre variante du dispositif de fixation selon l'invention est illustrée dans la figure 5. Dans ce cas, l'élément de fixation 27 est un corps cylindrique creux avec un filetage interne 28. Dans sa portion pénétrant dans le trou borgne 5 ou dans le couvercle métallique 18, l'élément de fixation 27 est à nouveau pourvu d'une entaille 9 pour l'ancrage dans la masse de remplissage 10. La face frontale extérieure de l'élément de fixation 27 aboutit en affleurement avec une surface 29 de la feuille de verre 1. L'insertion de l'élément de fixation 27 dans la vitre de verre feuilletée et le remplissage avec la masse de remplissage s'effectuent de la manière déjà décrite. En l'occurrence, le positionnement et le centrage de l'élément de fixation pendant le vessement et le durcissement de la masse de remplissage 10 peuvent être facilités par le fait qu'un dispositif de fixation est vissé provisoirement dans le filetage interne 28, lequel dispositif s'appuie sur la surface de la feuille de verre 1 et est à nouveau enlevé après le durcissement de la masse de remplissage 10.

Il convient de remarquer enfin que lors de l'utilisation d'ouvertures, évidements et éléments de fixation oblongs, il ne résulterait aucune différence par rapport aux illustrations décrites ici, dans le dispositif de fixation représenté en coupe latérale.

## Revendications

1. Elément de paroi constitué d'une plaque feuilletée, en particulier une vitre de verre feuilletée, comprenant une feuille (1) du côté du bâtiment, une feuille (2) du côté extérieur et au moins un élément de fixation (7 ; 16 ; 20 ; 23 ; 27), la feuille (1) du côté du bâtiment présentant au moins une ouverture traversante (4), avec l'élément de fixation (7 ; 16 ; 20 ; 23 ; 27) disposé dans cette ouverture, qui s'appuie contre la face arrière, tournée vers le feuilleté, de la feuille (1) du côté du bâtiment, la feuille (2) du côté extérieur étant pourvue d'au moins un évidement (5) aligné axialement sur l'ouverture (4) de la feuille (1) du côté du bâtiment, et ouvert vers celle-ci, **caractérisé en ce qu**'une portion d'extrémité de l'élément de fixation (7 ; 16 ; 20 ; 23 ; 27) pénètre dans l'évidement (5), et qu'à chaque fois au moins l'espace creux formé entre la paroi de l'évidement (5) et la portion d'extrémité de l'élément de fixation (7 ; 16 ; 20 ; 23 ; 27) est rempli d'une masse de remplissage durcie (10).

2. Elément de paroi selon la revendication 1, **caractérisé en ce que** l'évidement (5) présentant un diamètre intérieur plus grand que l'ouverture (4) est complètement rempli de la masse de remplissage (10) jusqu'à une face (15) en regard du fond de l'évidement (5) à l'intérieur du feuilleté, cette face étant formée sur la surface même de la feuille (1) du côté du bâtiment se trouvant dans le feuilleté, ou en tant que contre-dépouille à l'intérieur de l'évidement.

3. Elément de paroi selon la revendication 1 ou 2, **caractérisé en ce que** l'ouverture, l'évidement et l'élément de fixation sont réalisés avec une forme oblongue et des longueurs adaptées les unes aux autres.

4. Elément de paroi selon la revendication 1 ou 2, **caractérisé en ce que** l'ouverture est un alésage rond (4) et l'évidement est un trou borgne cylindrique (5) de plus grand diamètre que l'alésage, et **en ce que** l'espace creux entre la paroi du trou borgne (5) et la portion d'extrémité de l'élément de fixation (7 ; 16 ; 20 ; 23 ; 27) est rempli de la masse de remplissage (10) jusqu'à une surface annulaire (15) en regard du trou borgne (5) sur la feuille (1) du côté du bâtiment.

5. Elément de paroi selon l'une quelconque des revendications précédentes, **caractérisé en ce qu**'un élément de support (11) est prévu dans un espace creux entre la surface périphérique de l'ouverture (4) traversant la feuille (1) du côté du bâtiment et l'élément de fixation (7 ; 16 ; 20 ; 23 ; 27), pour l'alignement de l'élément de fixation à l'intérieur de l'ouverture.

6. Elément de paroi selon l'une quelconque des revendications précédentes, **caractérisé en ce qu**'un espace creux entre la surface périphérique de l'ouverture (4) traversant la feuille (1) du côté du bâtiment et l'élément de fixation (7 ; 16 ; 20 ; 23 ; 27) est également au moins partiellement rempli de la masse de remplissage durcie (10).

7. Elément de paroi selon l'une quelconque des revendications précédentes, **caractérisé en ce que** la portion d'extrémité de l'élément de fixation (7 ; 16 ; 20 ; 23 ; 27) est connectée à la masse de remplissage (10) de manière durable, en particulier par engagement positif, dans la direction axiale.

8. Elément de paroi selon la revendication 7, **caractérisé en ce que** la portion d'extrémité de l'élément de fixation (7 ; 16 ; 20 ; 23 ; 27) est pourvue sur sa surface périphérique d'une ou de plusieurs entailles (9) pour l'ancrage avec la masse de remplissage (10).

9. Elément de paroi selon l'une quelconque des revendications précédentes, **caractérisé en ce que** l'élément de fixation (16 ; 23) présente un alésage axial traversant (17 ; 24).

10. Elément de paroi selon la revendication 9, **caractérisé en ce qu**'au moins une ouverture radiale communiquant avec l'alésage axial est prévue dans la portion d'extrémité de l'élément de fixation.

11. Elément de paroi selon l'une quelconque des revendications précédentes, **caractérisé en ce que** l'élément de fixation (7 ; 16 ; 20 ; 23) est un boulon saillant par-dessus la feuille de verre (1) du côté du bâtiment et pourvu d'un filetage externe (8).

12. Elément de paroi selon l'une quelconque des revendications précédentes, **caractérisé en ce que** l'élément de fixation (20 ; 23) est un boulon saillant par-dessus la feuille de verre (1) du côté du bâtiment et pourvu d'un filetage interne (21).

13. Elément de paroi selon l'une quelconque des revendications précédentes, **caractérisé en ce qu**'une butée de profondeur connectée à l'élément de fixation (7 ; 16 ; 20 ; 23) est à chaque fois prévue, en particulier une plaque (13) entourant celui-ci, laquelle vient buter contre la surface de la plaque feuilletée du côté du bâtiment.

14. Elément de paroi selon la revendication 13, **caractérisé en ce que** la plaque (13) pour prédéfinir la profondeur d'enfoncement de l'élément de fixation (7 ; 16 ; 20 ; 23) est connectée de manière réglable (écrou 14) avec celui-ci.

15. Elément de paroi selon la revendication 13, **caractérisé en ce que** la plaque pour prédéfinir la profondeur d'enfoncement de l'élément de fixation est connectée fixement à celui-ci et en particulier est réalisée d'une pièce avec celui-ci.

16. Elément de paroi selon l'une quelconque des revendications précédentes 13 à 15, **caractérisé en ce que** la plaque (13) est collée à la surface de la plaque feuilletée tournée vers elle.

17. Elément de paroi selon l'une quelconque des revendications 1 à 10, **caractérisé en ce que** l'élément de fixation (27) est pourvu d'un filetage interne (28) et se termine approximativement en affleurement avec la surface (29) de la feuille de verre (1) du côté du bâtiment.

18. Elément de paroi selon l'une quelconque des revendications précédentes, **caractérisé en ce qu**'un recouvrement (18 ; 25) est disposé à chaque fois dans l'évidement (5) de la feuille (2) du côté extérieur, recouvrant au moins son fond, sous la forme de matériau non transparent.

19. Elément de paroi selon la revendication 18, **caractérisé en ce que** le recouvrement est formé par un revêtement opaque du fond, éventuellement aussi des parois de l'évidement.

20. Elément de paroi selon la revendication 18 ou 19, **caractérisé en ce que** le recouvrement est formé par un couvercle (18) ou un disque (25) inséré.

21. Elément de paroi selon l'une quelconque des revendications précédentes, **caractérisé en ce que** la masse de remplissage (10) est une masse de remplissage non élastique n'adhérant pas au verre.

22. Elément de paroi selon l'une quelconque des revendications précédentes, **caractérisé en ce qu**'une couche de colle (3) connectant l'une à l'autre les deux feuilles (1, 2) de la plaque feuilletée est pourvue dans la région de l'élément de fixation (7 ; 16 ; 20 ; 23 ; 27) d'un trou, dont le diamètre intérieur correspond au moins à la largeur de l'ouverture (4) traversant la feuille (1) du côté du bâtiment.

23. Elément de paroi selon l'une quelconque des revendications précédentes, **caractérisé en ce qu**'une couche de colle (3) connectant l'une à l'autre les deux feuilles (1, 2) de la plaque feuilletée est pourvue dans la région de l'élément de fixation (7 ; 16 ; 20 ; 23 ; 27) d'un trou dont le diamètre intérieur correspond à la largeur de l'évidement (5) dans la feuille de verre (2) du côté extérieur.

24. Elément de paroi selon l'une quelconque des revendications précédentes, **caractérisé en ce qu'il** est constitué d'une vitre de verre feuilletée se composant au moins de deux feuilles de verre (1, 2).

25. Elément de paroi selon la revendication 24, **caractérisé en ce qu**'au moins l'une des feuilles formant la vitre feuilletée est une feuille de verre précontrainte.

26. Elément de paroi selon la revendication 24 ou 25, **caractérisé en ce qu**'au moins l'une des feuilles de verre (1, 2) formant la vitre feuilletée est pourvue d'un revêtement de surface.

27. Elément de paroi ou groupe d'éléments de paroi selon l'une quelconque des revendications précédentes, **caractérisé en ce que** plusieurs éléments de fixation (7 ; 16 ; 20 ; 23 ; 27) très rapprochés, disposés dans un ou plusieurs éléments de paroi s'appuyant les uns contre les autres, sont assemblés au moyen d'un organe de liaison pour former un groupe, qui est fixé conjointement sur une sous-construction.

28. Paroi composée d'éléments de paroi fixés sur une sous-construction, **caractérisée en ce qu'elle** comprend des éléments de paroi selon l'une quelconque des revendications 1 à 26.

## Patentansprüche

1. Wandelement, das aus einer Verbundplatte besteht, insbesondere eine Verbundglasscheibe, umfassend eine gebäudeseitige Scheibe (1), eine außenseitige Scheibe (2) sowie wenigstens ein Befestigungselement (7; 16; 20; 23; 27), wobei die gebäudeseitige Scheibe (1) wenigstens eine durchgehende Öffnung (4) aufweist, wobei das Befestigungselement (7; 16; 20; 23; 27) in dieser Öffnung angeordnet ist, das sich an der dem Verbund zugewandten Rückseite der gebäudeseitigen Scheibe (1) abstützt, wobei die außenseitige Scheibe (2) mit wenigstens einer Ausnehmung (5) versehen ist, die mit der Öffnung (4) der gebäudeseitigen Scheibe (1) axial ausgerichtet und zu dieser hin offen ist, **dadurch gekennzeichnet, dass** ein Endabschnitt des Befestigungselements (7; 16; 20; 23; 27) in die Ausnehmung (5) eindringt und dass jedes Mal wenigstens der zwischen der Wand der Ausnehmung (5) und dem Endabschnitt des Befestigungselements (7; 16; 20; 23; 27) gebildete Hohlraum mit einer gehärteten Füllmasse (10) ausgefüllt wird.

2. Wandelement nach Anspruch 1, **dadurch gekennzeichnet, dass** die Ausnehmung (5), die einen größeren Innendurchmesser als die Öffnung (4) aufweist, bis zu einer Fläche (15) gegenüber dem Grund des Ausnehmung (5) innerhalb des Verbunds vollständig mit der Füllmasse (10) ausgefüllt wird, wobei diese Fläche an der Oberfläche selbst der sich in dem Verbund befindlichen gebäudeseitigen Scheibe (1) oder als Hinterschneidung innerhalb der Ausnehmung gebildet ist.

3. Wandelement nach Anspruch 1 oder 2, **dadurch gekennzeichnet, dass** die Öffnung, die Ausnehmung und das Befestigungselement mit einer länglichen Form und einander angepassten Längen ausgebildet sind.

4. Wandelement nach Anspruch 1 oder 2, **dadurch gekennzeichnet, dass** die Öffnung eine runde Bohrung (4) ist und die Ausnehmung ein zylindrisches Sackloch (5) mit größerem Durchmesser als die Bohrung ist und dass der Hohlraum zwischen der Wand des Sacklochs (5) und dem Endabschnitt des Befestigungselements (7; 16; 20; 23; 27) bis zu einer ringförmigen Fläche (15) gegenüber dem Sackloch (5) an der gebäudeseitigen Scheibe (1) mit der Füllmasse (10) ausgefüllt ist.

5. Wandelement nach einem der vorstehenden Ansprüche, **dadurch gekennzeichnet, dass** in einem Hohlraum zwischen der Umfangsfläche der die gebäudeseitige Scheibe (1) durchquerenden Öffnung (4) und dem Befestigungselement (7; 16; 20; 23, 27) ein Stützelement (11) für das Ausrichten des Befestigungselements innerhalb der Öffnung vorgesehen ist.

6. Wandelement nach einem der vorstehenden Ansprüche, **dadurch gekennzeichnet, dass** ein Hohlraum zwischen der Umfangsfläche der die gebäudeseitige Scheibe (1) durchquerenden Öffnung (4) und dem Befestigungselement (7; 16; 20; 23; 27) ebenfalls wenigstens teilweise mit der gehärteten Füllmasse (10) ausgefüllt ist.

7. Wandelement nach einem der vorstehenden Ansprüche, **dadurch gekennzeichnet, dass** der Endabschnitt des Befestigungselements (7; 16; 20; 23; 27) mit der Füllmasse (10) dauerhaft, insbesondere durch Formschluss, in axialer Richtung verbunden ist.

8. Wandelement nach Anspruch 7, **dadurch gekennzeichnet, dass** der Endabschnitt des Befestigungselements (7; 16; 20; 23; 27) an seiner Umfangsfläche mit einer oder mehreren Einkerbungen (9) für die Verankerung mit der Füllmasse (10) versehen ist.

9. Wandelement nach einem der vorstehenden Ansprüche, **dadurch gekennzeichnet, dass** das Befestigungselement (16; 23) eine durchgehende Axialbohrung (17; 24) aufweist.

10. Wandelement nach Anspruch 9, **dadurch gekennzeichnet, dass** wenigstens eine mit der Axialbohrung in Verbindung stehende radiale Öffnung in dem Endabschnitt des Befestigungselements vorgesehen ist.

11. Wandelement nach einem der vorstehenden Ansprüche, **dadurch gekennzeichnet, dass** das Befestigungselement (7; 16; 20; 23) ein Bolzen ist, der über die gebäudeseitige Glasscheibe (1) hinweg vorspringt und mit einem Außengewinde (8) versehen ist.

12. Wandelement nach einem der vorstehenden Ansprüche, **dadurch gekennzeichnet, dass** das Befestigungselement (20; 23) ein Bolzen ist, der über die gebäudeseitige Glasscheibe (1) hinweg vorspringt und mit einem Innengewinde (21) versehen ist.

13. Wandelement nach einem der vorstehenden Ansprüche, **dadurch gekennzeichnet, dass** jedes Mal ein mit dem Befestigungselement (7; 16; 20; 23) verbundener Tiefenanschlag vorgesehen ist, insbesondere eine dieses umgebende Platte (13), die gegen die Oberfläche der gebäudeseitigen Verbundplatte stößt.

14. Wandelement nach Anspruch 13, **dadurch gekennzeichnet, dass** die Platte (13) zum Vordefinieren der Einstecktiefe des Befestigungselements (7; 16; 20; 23) einstellbar (Mutter 14) mit diesem verbunden ist.

15. Wandelement nach Anspruch 13, **dadurch gekennzeichnet, dass** die Platte zum Vordefinieren der Einstecktiefe des Befestigungselements mit diesem fest verbunden ist und insbesondere einstückig mit diesem ausgebildet ist.

16. Wandelement nach einem der vorstehenden Ansprüche 13 bis 15, **dadurch gekennzeichnet, dass** die Platte (13) auf die ihr zugewandte Oberfläche der Verbundplatte geklebt ist.

17. Wandelement nach einem der Ansprüche 1 bis 10, **dadurch gekennzeichnet, dass** das Befestigungselement (27) mit einem Innengewinde (28) versehen ist und annähernd bündig mit der Oberfläche (29) der gebäudeseitigen Glasscheibe (1) abschließt.

18. Wandelement nach einem der vorstehenden Ansprüche, **dadurch gekennzeichnet, dass** jedes Mal in der Ausnehmung (5) der außenseitigen Scheibe (2) eine wenigstens ihren Grund bedeckende Abdeckung (18; 25) in Form eines nicht transparenten Materials angeordnet ist.

19. Wandelement nach Anspruch 18, **dadurch gekennzeichnet, dass** die Abdeckung durch eine opake Beschichtung des Grunds, eventuell auch der Wände der Ausnehmung gebildet ist.

20. Wandelement nach Anspruch 18 oder 19, **dadurch gekennzeichnet, dass** die Abdeckung durch einen Deckel (18) oder eine eingefügte Scheibe (25) gebildet ist.

21. Wandelement nach einem der vorstehenden Ansprüche, **dadurch gekennzeichnet, dass** die Füllmasse (10) eine nicht an dem Glas haftende unelastische Füllmasse ist.

22. Wandelement nach einem der vorstehenden Ansprüche, **dadurch gekennzeichnet, dass** eine Klebstoffschicht (3), die die beiden Scheiben (1, 2) der Verbundplatte miteinander verbindet, im Bereich des Befestigungselements (7; 16; 20; 23; 27) mit einem Loch versehen ist, dessen Innendurchmesser wenigstens der Breite der die gebäudeseitige Scheibe (1) durchquerenden Öffnung (4) entspricht.

23. Wandelement nach einem der vorstehenden Ansprüche, **dadurch gekennzeichnet, dass** eine Klebstoffschicht (3), die die beiden Scheiben (1, 2) der Verbundplatte miteinander verbindet, im Bereich des Befestigungselements (7; 16; 20; 23; 27) mit einem Loch versehen ist, dessen Innendurchmesser der Breite der Ausnehmung (5) in der außenseitigen Glasscheibe (2) entspricht.

24. Wandelement nach einem der vorstehenden Ansprüche, **dadurch gekennzeichnet, dass** es von einer Verbundglasscheibe, die wenigstens aus zwei Glasscheiben (1, 2) besteht, gebildet ist.

25. Wandelement nach Anspruch 24, **dadurch gekennzeichnet, dass** wenigstens eine der die Verbundscheibe bildenden Scheiben eine vorgespannte Glasscheibe ist.

26. Wandelement nach Anspruch 24 oder 25, **dadurch gekennzeichnet, dass** wenigstens eine der die Verbundscheibe bildenden Glasscheiben (1, 2) mit einer Oberflächenbeschichtung versehen ist.

27. Wandelement oder Gruppe von Wandelementen nach einem der vorstehenden Ansprüche, **dadurch gekennzeichnet, dass** mehrere sehr nahe gelegene Befestigungselemente (7; 16; 20; 23; 27), die in einem oder mehreren sich aneinander abstützenden Wandelementen angeordnet sind, mittels eines Verbindungsorgans verbunden sind, um eine Gruppe zu bilden, die gemeinsam an einer Unterkonstruktion befestigt ist.

28. Wand aus an einer Unterkonstruktion befestigten Wandelementen, **dadurch gekennzeichnet, dass** sie Wandelemente nach einem der Ansprüche 1 bis 26 umfasst.

## Claims

1. A wall element consisting of a laminated plate, in particular a laminated glass pane, comprising a sheet (1) on the building side, a sheet (2) on the external side and at least one fixing element (7, 16, 20, 23, 27), wherein the sheet on the building side has at least one through opening (4), with the fixing element (7, 16, 20, 23, 27) provided in this opening, which presses against the rear face, facing the laminate, of the sheet (1) on the building side, the sheet (2) on the external side (2) being provided with at least one recess (5) which is aligned axially over the opening (4) of the sheet (1) on the building side, and open toward the latter, **characterized in that** an end portion of the fixing element (7, 16, 20, 23, 27) penetrates into the recess (5), and that on each occasion at least the hollow space formed between the wall of the recess (5) and the end portion of the fixing element (7, 16, 20, 23, 27) is filled with a cured filler (10).

2. The wall element as claimed in claim 1, **characterized in that** the recess (5) having an internal diameter larger than the opening (4) is completely filled with the filler (10) up to a face (15) facing the bottom of the recess (5) inside the laminate, this face being formed on the actual surface of the sheet (1) on the building side located in the laminate, or as a countersunk hole inside the recess.

3. The wall element as claimed in claim 1 or 2, **characterized in that** the opening, recess and fixing element are made with an oblong shape and lengths matched to each other.

4. The wall element as claimed in claim 1 or 2, **characterized in that** the opening is a round bore (4) and the recess is a cylindrical blind hole (5) of larger diameter than the bore, and **in that** the hollow space between the wall of the blind hole (5) and the end portion of the fixing element (7, 16, 20, 23, 27) is filled with the filler (10) up to an annular surface (15) facing the blind hole (5) of the sheet on the building side (1).

5. The wall element as claimed in any one of the preceding claims, **characterized in that** a support element (11) is provided in a hollow space between the peripheral surface of the opening (4) passing through the sheet (1) on the building side and the fixing element (7, 16, 20, 23, 27), in order to align the fixing element inside the opening.

6. The wall element as claimed in any one of the preceding claims, **characterized in that** a hollow space between the peripheral surface of the opening (4) passing through the sheet (1) on the building side and the fixing element (7, 16, 20, 23, 27) is also at least partially filled with the cured filler (10).

7. The wall element as claimed in any one of the preceding claims, **characterized in that** the end portion of the fixing element (7, 16, 20, 23, 27) is connected to the filler (10) in a lasting manner, in particular by positive engagement, in the axial direction.

8. The wall element as claimed in claim 7, **characterized in that** the end portion of the fixing element (7, 16, 20, 23, 27) is provided, on its peripheral surface, with one or more notches (9) for anchoring with the filler (10).

9. The wall element as claimed in any one of the preceding claims, **characterized in that** the fixing element (16, 23) has an axial through bore (17, 24).

10. The wall element as claimed in claim 9, **characterized in that** at least one radial opening communicating with the axial bore is provided in the end portion of the fixing element.

11. The wall element as claimed in any one of the preceding claims, **characterized in that** the fixing element (7, 16, 20, 23) is a bolt projecting above the glass sheet (1) on the building side and provided with an external thread (8).

12. The wall element as claimed in any one of the preceding claims, **characterized in that** the fixing element (20, 23) is a bolt projecting above the glass sheet (1) on the building side and provided with an internal thread (21).

13. The wall element as claimed in any one of the preceding claims, **characterized in that** a depth stop connected to the fixing element (7, 16, 20, 23) is provided on each occasion, in particular a plate (13) surrounding the latter, which abuts against the surface of the laminated plate on the building side.

14. The wall element as claimed in claim 13, **characterized in that** the plate (13) for predefining the insertion depth of the fixing element (7, 16, 20, 23) is connected in an adjustable manner (nut 14) therewith.

15. The wall element as claimed in claim 13, **characterized in that** the plate for predefining the insertion depth of the fixing element is fixedly connected thereto and in particular is made as one piece therewith.

16. The wall element as claimed in any one of the preceding claims 13 to 15, **characterized in that** the plate (13) is adhesively bonded to the surface of the laminated plate facing it.

17. The wall element according to any one of claims 1 to 10, **characterized in that** the fixing element (27) is provided with an internal thread (28) and finishes approximately flush with the surface (29) of the glass sheet (1) on the building side.

18. The wall element as claimed in any one of the preceding claims, **characterized in that** a covering (18, 25) is placed on each occasion in the recess (5) of the sheet on the outer side, at least covering its bottom, in the form of a nontransparent material.

19. The wall element as claimed in claim 18, **characterized in that** the covering is formed by an opaque coating covering the bottom, and possibly also the walls of the recess.

20. The wall element as claimed in claim 18 or 19, **characterized in that** the covering is formed by a fitted cover (18) or disk (25).

21. The wall element as claimed in any one of the preceding claims, **characterized in that** the filler (10) is an inelastic filler which does not adhere to the glass.

22. The wall element as claimed in any one of the preceding claims, **characterized in that** an adhesive layer (3) connecting the two sheets (1, 2) of the laminated plate to each other is provided in the region of the fixing element (7, 16, 20, 23, 27) with a hole, whose internal diameter corresponds at least to the width of the opening (4) passing through the sheet (1) on the building side.

23. The wall element as claimed in any one of the preceding claims, **characterized in that** an adhesive layer (3) connecting the two sheets (1, 2) of the laminated plate together is provided in the region of the fixing element (7, 16, 20, 23, 27) with a hole whose internal diameter corresponds to the width of the recess (5) in the glass sheet (2) on the outer side.

24. The wall element as claimed in any one of the preceding claims, **characterized in that** it consists of a laminated glass pane consisting of at least two sheets of glass (1, 2).

25. The wall element as claimed in claim 24, **characterized in that** at least one of the sheets forming the laminated pane is a sheet of prestressed glass.

26. The wall element as claimed in claim 24 or 25, **characterized in that** at least one of the glass sheets (1, 2) forming the laminated pane is provided with a surface coating.

27. The wall element or group of wall elements as claimed in any one of the preceding claims, **characterized in that** several very close fixing elements (7, 16, 20, 23, 27), placed in one or more wall elements pressing against each other, are assembled by means of a connection member in order to form a group, which is fixed at the same time to a subconstruction.

28. A wall consisting of wall elements fixed to a subconstruction, **characterized in that** it comprises wall elements as claimed in any one of claims 1 to 26.
